# EUROPEAN PATENT SPECIFICATION

(11) **EP 3 851 349 B1**
(45) Date of publication and mention of the grant of the patent: **15.11.2023**
(21) Application number: 21151581.2
(22) Date of filing: 14.01.2021
(51) Int. Cl.: B60T 17/02, B60T 17/04, B60T 13/10, B60T 17/22

(54) **DEVICE FOR AVOIDING BRAKE DRAGGING IN A MOTOR VEHICLE CONFORMITY OF EMISSION TEST**
VORRICHTUNG ZUR VERMEIDUNG VON BREMSSCHLEIFEN BEI DER PRÜFUNG DER KONFORMITÄT DER EMISSIONEN EINES KRAFTFAHRZEUGS
DISPOSITIF PERMETTANT D'ÉVITER LA TRAÎNÉE DE FREIN LORS D'UN ESSAI DE CONFORMITÉ D'ÉMISSION D'UN VÉHICULE À MOTEUR

(30) Priority: 14.01.2020 CN 202020078766 U
(43) Date of publication of application: 21.07.2021
(73) Proprietor: Shanghai Volvo Car Research and Development Co., Ltd., Shanghai 201821 (CN)
(72) Inventor: LEI, Jie, Shanghai, 201815 (CN); LUND, Thomas, 40531 Göteborg (SE); MOU, Bingheng, Shanghai, 201815 (CN)
(74) Representative: Maiwald GmbH

(56) References cited:
- US-A- 3 796 290
- US-A1- 2010 253 136
- US-A1- 2019 351 890

## Description

### Field

The present application generally relates to a device for avoiding brake dragging in a motor vehicle conformity of emission ("COE") test, particularly a portable pressure relief device for relieving the pressure in a hydraulic circuit of a brake system of the motor vehicle.

### Background

Prior to leaving the factory, a motor vehicle manufactured via a production line has to undergo a conformity of emission test in which the motor vehicle to be tested simulates travelling a certain number of kilometers (usually 3000 kilometers) with an exhaust emission test being carried out for the motor vehicle. The motor vehicle is only eligible for sales after it meets conformity of emission standards as required by the national regulations.

Publication US20190351890A1 discloses a brake control system for a vehicle, comprising a compressor, a reservoir, and a multi-port valve, wherein the compressor has an inlet and an outlet, and wherein the multi-port valve has a first configuration and a second configuration, in which first configuration the outlet is in fluid communication with the reservoir and the inlet is in fluid communication with atmosphere, and in which second configuration the outlet is in fluid communication with atmosphere and the inlet is in fluid communication with the reservoir.

Publication US3796290 discloses a brake wheel cylinder and bleeding system, comprising a vacuum pump connected via a flexible conduit to a vehicle master cylinder, wherein a selectively operable valve is disposed in the flexible conduit.

Publication US20100253136A1 discloses a braking system comprising a brake fluid pump.

During manufacturing of a motor vehicle, due to reasons such as errors in production processes, sometimes when the motor vehicle leaves the production line, a braking force may already be applied onto the wheels by a brake device. For instance, a hydraulic cylinder of the brake device may be preset with a certain pressure such that a brake caliper can drive a friction sheet to contact a brake disc for braking. Usually, after the vehicle travels a certain distance on real roads, the preset braking force will be released because the suspension system of the vehicle would be impacted in various directions on the real road, which in turn impacts the brake device.

However, during the emission test, different from travelling on the real road, the motor vehicle usually simulates by having the wheels contact a continuously rotating roller g on a testing line. In that case, the suspension system of the motor vehicle will not sustain any unexpected or random impact similar to traveling on the real road. In turn, no such impact will be passed onto the brake device to release the braking force applied onto the wheels by the brake device. Therefore, if the motor vehicle with its wheels being applied with the braking force undergoes the exhaust emission test, it will generate inaccurate test data. More importantly, for mass-produced motor vehicles, some motor vehicles may be applied with the braking force on their wheels and others may not. In that case, the conformity of testing results is usually poor. As a result, they fail to pass the conformity of emission test.

In order to solve such an issue, in the prior art, a specific spring device was designed and installed onto the wheels before each emission test so as to separate the friction sheet from the brake disc. However, the prior art solution cannot be applied to the exhaust emission test of the mass-produced motor vehicles. Different spring devices have to be designed for different types of motor vehicles. Moreover, installation of spring devices in batches during the emission test will cause other issues, such as waste of laboring or generation of other errors.

### Summary

To solve the abovementioned issue, the present application proposes an improved pressure relief device for the COE test of a motor vehicle to ensure the testing results of mass-produced motor vehicles conform with the required emission standards.

According to the invention, a device for avoiding brake dragging in a COE test of a motor vehicle is proposed, wherein the device comprises:
a vacuum pump;
a power supply capable of providing electric power to the vacuum pump;
a controller controlling the power supply to selectively provide electric power to the vacuum pump to control its operation; and
a hose extending from an outlet of the vacuum pump, wherein an adjustable pressure-regulating valve is connected in series in the hose, and a free end of the hose is provided with a connection port which is liquid-tightly and removably connected to a brake fluid storage container of a brake drive unit of the motor vehicle. Therefore, it is convenient for a tester to release the internal pressure of the brake fluid storage container for various vehicle models prior to a COE emission test of the motor vehicle, so as to eliminate a pre-applied braking force which may affect the conformity of the test results.

The device for avoiding the brake dragging in the COE test of the motor vehicle further comprises an outer shell in which the power supply, the vacuum pump, and the adjustable pressure-regulating valve are installed. Therefore, it is convenient for the tester to carry and move the pressure relief device at test sites.

Optionally, the adjustable pressure-regulating valve is configured to set or regulate a negative pressure output by the hose during the operation of the vacuum pump. Therefore, although the output power of the vacuum pump is constant, the output negative pressure can be adjusted, as desired, by setting the pressure-regulating valve.

Optionally, the negative pressure is preset between 0.1 and 1 bar.

Optionally, the device for avoiding the brake dragging in the COE test of the motor vehicle further comprises a pressure measuring device which is connected in series into the hose upstream of the connection port of the hose, so as to detect the pressure in the hose. Therefore, it informs the tester of the internal pressure of the brake fluid storage container in real-time during the test.

Optionally, the power supply is a battery or a voltage stabilizer which is connectable to an external voltage source.

Optionally, the controller is a manual switch for controlling the power supply to provide electric power.

Optionally, the controller comprises an electronic control unit, wherein the electronic control unit receives pressure testing data of the pressure measuring device and on the basis of the received pressure testing data, instructs the power supply to or not to provide electric power.

Optionally, the device for avoiding the brake dragging in the COE test of the motor vehicle further comprises a display on which the pressure testing date received by the electronic control unit from the pressure measuring device are displayed.

According to another aspect of the present application, a method for carrying out a COE test of a motor vehicle is proposed. The method comprises connecting the aforementioned device for avoiding brake dragging in the COE test of the motor vehicle to a brake fluid storage container of a brake drive unit of the motor vehicle before the motor vehicle undergoes the COE test; and activating the device for avoiding brake dragging in the COE test of the motor vehicle.

Optionally, before the device for avoiding brake dragging in the COE test of the motor vehicle is connected to the brake fluid storage container, a negative pressure output by the device can be set, with respect to various vehicle models to be tested, using an adjustable pressure-regulating valve of the portable pressure relief device.

Optionally, when the device for avoiding brake dragging in the COE test of the motor vehicle is connected to the brake fluid storage container and has been activated, after a predefined period has passed, the device for avoiding brake dragging in the COE test of the motor vehicle is deactivated and detached from the brake fluid storage container.

Optionally, when the device for avoiding brake dragging in the COE test of the motor vehicle is connected to the brake fluid storage container and has been activated, based on the pressure status of the brake fluid storage container, the device for avoiding brake dragging in the COE test of the motor vehicle is deactivated and detached from the brake fluid storage container.

Using the above technical measures according to the present application, the poor conformity of testing results caused by the braking force possibly applied to the brake device before the mass-produced motor vehicles undergo the exhaust emission test can be conveniently and simply eliminated. Moreover, the tester is able to adjust the parameters of the pressure relief device to meet the pressure relief requirements for different types of motor vehicles, so as to save labor and material costs.

### Brief description of the drawings

The principle and various aspects of the present application will be well understood by the following detailed description in combination of the attached drawings. It should be noted that for the sake of clarity the drawings may be provided in different ratios, which should not affect to the scope of the present application. In the drawings:
Fig. 1 is a diagram schematically illustrating a part of a brake drive unit of a motor vehicle's brake device;
Fig. 2 is a system chart schematically illustrating an example of a device according to the present application for avoiding brake dragging in a COE test of the motor vehicle;
Fig. 3 is a system chart schematically illustrating another optional embodiment of the device according to the present application for avoiding the brake dragging in the COE test of the motor vehicle;
Fig. 4 is a diagram schematically illustrating a device according to an embodiment of the present application for avoiding the brake dragging in the COE test of the motor vehicle;
Fig. 5 is a view schematically illustrating that the device according to an embodiment of the present application for avoiding the brake dragging in the COE test of the motor vehicle is connected to a brake unit of the motor vehicle prior to the COE test of the motor vehicle;
Fig. 6 is a flow chart schematically illustrating an example of a method for operating the device for avoiding the brake dragging in the COE test of the motor vehicle; and
Fig. 7 is a flow chart schematically illustrating another example of the method for operating the device for avoiding the brake dragging in the COE test of the motor vehicle.

### Detailed description of embodiments

In the drawings of the present application, features having the same configuration or similar functions are represented by the same reference numerals.

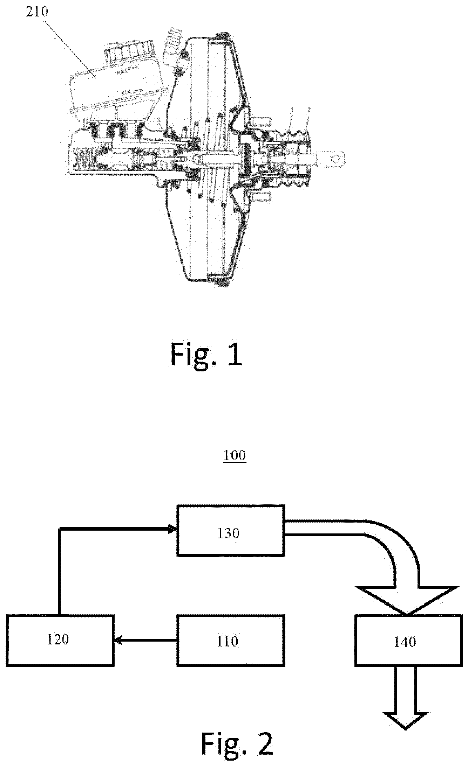

Fig. 1 schematically shows a part of a brake drive unit 200 in a brake device, which is commonly used in a motor vehicle and can be hydraulically driven. The brake drive unit 200 generally comprises an actuator mechanism, by which a friction sheet of the motor vehicle can be driven, and a brake fluid storage container 210 adapted for storing a brake fluid therein. The brake fluid is stored under a pressure in the brake fluid storage container 210. Usually, after the motor vehicle leaves its production line, a higher internal pressure may remain in the brake fluid storage container 210 such that the actuator mechanism may unexpectedly drive the friction sheet to act on a brake disc of the motor vehicle in advance, causing a brake dragging force that affects a COE test of the motor vehicle. Therefore, the key to eliminate the brake dragging force is to eliminate the higher internal pressure that may remain in the brake fluid storage container 210.

With respect to the issues mentioned in the background part of the description, in order to avoid the poor conformity of COE testing results due to a braking force pre-applied to the motor vehicle's wheels, during the COE test of the motor vehicle, the present application proposes a device 100 through which the dragging brake can be avoided during the COE test of the motor vehicle. The device 100 is a portable device, especially a portable pressure relief device. Fig. 2 is a system chart schematically illustrating an example of the device 100 by which the brake dragging can be avoided during the COE test of the motor vehicle. As shown, the device 100 comprises a controller 110, a power supply 120, a vacuum pump 130, as well as an adjustable pressure-regulating valve 140. In an example, the controller 110 can be a manual switch so as to control whether the power supply 120 provides electric power to the vacuum pump 130 or not. In another example, the controller 110 can be an electric control unit for controlling operation of relevant electrical components. A negative pressure outlet of the vacuum pump 130 is hermetically connected to an inlet of the adjustable pressure-regulating valve 140 via a tube, and an outlet of the adjustable pressure-regulating valve 140 is connectable to another tube. In the embodiment of the present application, the power supply 120 can be a battery capable of supplying electric power, especially a rechargeable battery, which is controlled by the controller 110 to provide electric power to the vacuum pump 130. The output power of the vacuum pump 130 is constant, so as to generate a negative pressure during its operation. The adjustable pressure-regulating valve 140 is used to regulate the negative pressure generated by the vacuum pump 130 and output via the tube. For instance, by setting the adjustable pressure-regulating valve 140, the value of the negative pressure/vacuum pressure as output can be adjusted between 0.1 and 1 bar.

In use, the tube of the adjustable pressure-regulating valve 140 is first liquid-tightly connected to the brake fluid storage container 210 such that the interior of the tube is in communication with the brake fluid storage container 210. Then, the value of the negative pressure of the adjustable pressure-regulating valve 140 is set to a desired value. Thereafter, the controller 110 is activated such that the power supply 120 provides electric power to the vacuum pump 130. The vacuum pump 130 operates to output a negative pressure, and the output negative pressure enters the interior of the brake fluid storage container 210 after being regulated by the adjustable pressure-regulating valve 140, such that the internal pressure of the brake fluid storage container 210 is lowered to the set desired value. During this process, if it is desired to lower the pressure further, it is possible to continue to change the negative pressure setting of the adjustable pressure-regulating valve 140. In this way, prior to every COE test of the motor vehicle being carried out, the device 100 is always connected to the brake fluid storage container 210 of the brake drive unit 200 of the motor vehicle and the device 100 is activated, such that the brake fluid storage container 210 can be pressure-relieved to a uniformly prescribed pressure, so as to eliminate the effect of the dragging brake on the COE test of the motor vehicle in advance.

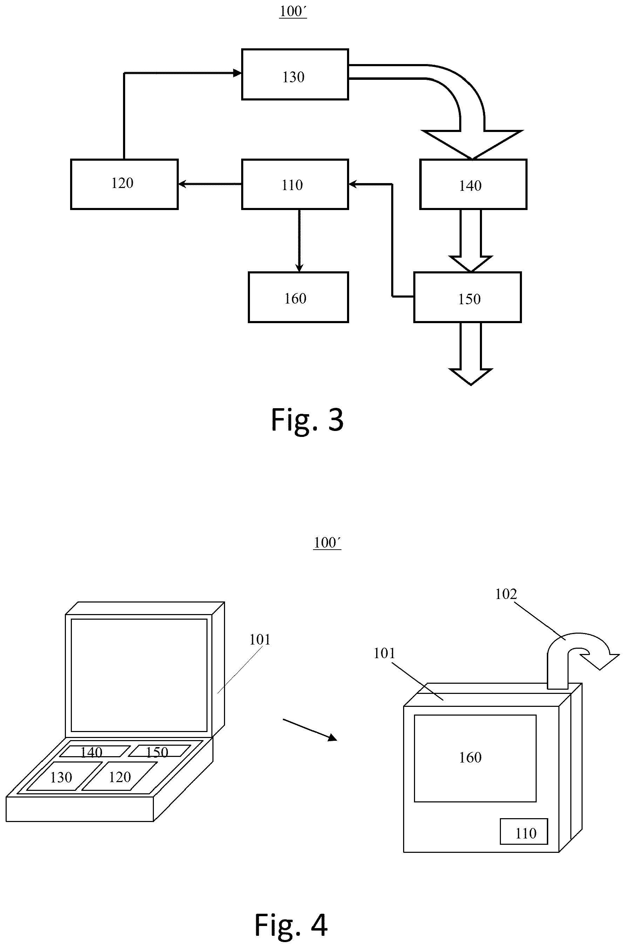

Fig. 3 is a system chart schematically illustrating another optional example of a device 100' according to the present application for avoiding the dragging brake in the COE test of the motor vehicle. Similar to the device 100, the device 100' is a portable device, particularly a portable pressure relief device. According to the optional example, the device 100' also comprises the controller 110, the power supply 120, the vacuum pump 130, and the adjustable pressure-regulating valve 140 mentioned above. Those components have the same functions as described in the above example, and thus the explanation to them will not be repeated. Besides, a pressure measuring device 150 is connected in series in the tube connected to the outlet of the adjustable pressure-regulating valve 140. For example, the pressure measuring device 150 can be a mechanical manometer having an index dial and a pointer for reading pressure measurements. Therefore, after the tube is connected to the brake fluid storage container 210 and the vacuum pump 130 is activated, a user is able to in real-time know the internal pressure of the brake fluid storage container 210 and decide when the device 100 will be detached.

For instance, the pressure measuring device 150 can be an electronic pressure gauge capable of outputting electrical data. As shown in Fig. 3, a display 160 can be provided for the device 100 such that the electrical data output by the pressure measuring device 150 can be received and displayed in real-time on the display 160. For instance, the display 160 can be a Liquid Crystal Display (LED), an OLED display or the like. In this way, it enables a tester to conveniently observe how the internal pressure of the tube changes in real-time and correspondingly decide whether the operation of the device 100' shall be continued or stopped.

Fig. 4 is a diagram schematically illustrating a portable pressure relief device according to an embodiment of the present application. For example, the portable pressure relief device can be the device 100 or 100' as already explained or any other suitable pressure relief device according to the principle of the present application. The device 100' is used as an example to explain the embodiment of Fig. 4 below. The device 100' comprises an outer shell 101. The vacuum pump 130 and the power supply 120 for providing electric power to the vacuum pump 130 are installed in the outer shell 101. For instance, the power supply 120 can be a battery or a voltage stabilizer, which is connectable to an external voltage source (for example, 220V). The outer shell 101 can be in the form of a business suitcase having two half casings, which are hinged and lockable to each other such that the power supply 120 and the vacuum pump 130 can be installed therein. Designing the outer shell 101 in the above mentioned manner facilitates, whenever necessary, adjusting operation parameters of the components installed therein.

In case that the power supply 120 is the voltage stabilizer, which is connected to an external voltage source of 220V, a power cable extends outwards from the outer shell 101 to connect the power supply 120 with the voltage source of 220V. Furthermore, the adjustable pressure-regulating valve 140 and the pressure measuring device 150 as the electronic pressure gauge can be installed in the outer shell 101. In the interior space of the outer shell 101, the vacuum pump 130, the pressure-regulating valve 140 and the pressure measuring device 150 are connected to each other in series by a hose 102. Outside the outer shell 101, the hose 102 extends outwards from the outer shell 101. After the device 100' is installed in place and is activated to operate, the pressure measuring device 150 can detect the liquid pressure within the hose 102 and transmit the measurements to the controller 110 in real time. The display 160 is provided on one side of the outer shell 101. Under the control of the controller 110, the measurements of the pressure measuring device 150 can be displayed on the display 160 to be monitored by the tester using the device 100'. For instance, the display 160 can be a touch screen. The controller 110 thus has an operation interface, which can be shown on the touch screen, such that the tester can manipulate the operation interface on the touch screen using his/her finger. In this way, it is possible to control activation or deactivation of the power supply 120 by the controller 110. The hose 102 can be provided with a connection port liquid-tightly and removably connectable to the brake fluid storage container 210 of the brake drive unit 200. For instance, the connection port can be equipped with screw threads corresponding to the mating screw threads on the brake fluid storage container 210. Moreover, only when such screw-thread engagement is in place and a good liquid-sealing on the joining interface between the two components is achieved, the hose 102 is in fluid communication with the brake fluid storage container 210. It should be understood by the ordinary person in the art that the connection port can be configured in any other suitable manner.

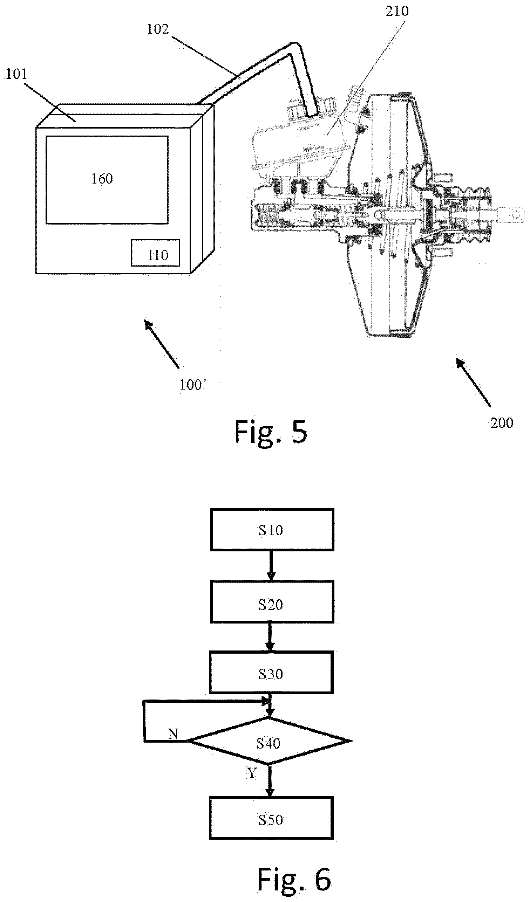

Fig. 5 is a diagram schematically illustrating the portable device 100 or 100' according to the present application when it is connected to the brake unit 200 of the motor vehicle prior to the COE test of the motor vehicle. Next, an example of a method for operating such portable pressure relief device is explained using Fig. 6. The example of the portable device 100 in Fig. 6 comprises a manual switch as the controller 110.

As shown in Fig. 6, at step 510, the portable device 100 can be activated. For instance, the controller 110, the manual switch as an example, can be closed such that the power supply 120 provides electric power to the vacuum pump 130. Then, at step 520, the pressure-regulating valve 140 is manually adjusted for different vehicle models such that the negative pressure in a tube section downstream of the pressure-regulating valve 140 can be preset at a value within an exemplary range of 0.1 ^{~} 1 bar. Then, at step S30, the hose 102 of the portable device 100 is connected to the brake fluid storage container 210 of the brake drive unit 200, as shown in Fig. 5. In one exemplary configuration, at the very beginning of the connection, there can be an indicator, such as a distinct sound, indicating that the vacuum pump 130 is generating the negative pressure. During this process, if necessary, the preset value for the pressure-regulating valve 140 can be adjusted again. Then, at step 540, after a certain period, the pressure releasing of the brake fluid storage container 210 is made stable. i.e. the internal pressure of the hose 102 is stable. Finally, at step 550, the controller 110 (the manual switch as an example) is open such that the vacuum pump 130 is powered off and the hose 102 can be detached from the brake drive unit 200. It should be understood by the ordinary person in the art that the order of the above mentioned steps S10, S20, and S30 can be changed if desired. For instance, step S30 can be alternatively reset prior to steps S10 and 530.

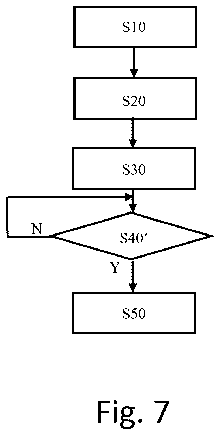

It should be understood by the ordinary person in the art that a method for operating the portable device 100' can be similarly carried out. Optionally, in another example of the operating method as shown in Fig. 7, the portable device 100' comprises the controller 110 as the electric control unit, the pressure measuring device 150 as the electronic pressure gauge, as well as the display 160. In this way, according to the example of the operating method as shown in Fig. 7, steps S10, S20, 530, and 550 can be carried out in a manner similar to the one introduced with respect to Fig. 6. The difference is that at step 540', the controller 110 can be configured to receive pressure measurement data of the hose 102 detected by the pressure measuring device 150, and optionally the pressure detecting data can be displayed on the display 160. Furthermore, the controller 110 can be configured to judge whether the received pressure measurement data reach a preset value for the pressure-regulating valve 140 and whether the pressure change becomes stable. If the judgment result is "NO", the power supply 120 is instructed to continue to provide electric power to the vacuum pump 130. If the judgment result is "YES", the power supply 120 is instructed to stop providing electric power to the vacuum pump 130.

## Claims

1. A device for avoiding brake dragging in a conformity of emission test of a motor vehicle, comprising:
a vacuum pump (130); and
a power supply (120) capable of providing electric power to the vacuum pump (130);
a controller (110) controlling the power supply (120) to selectively provide electric power to the vacuum pump (130), **characterized in that** the device further comprises:
a hose (102) extending from an outlet of the vacuum pump (130), wherein an adjustable pressure-regulating valve (140) is connected in series to the hose (102), and an end of the hose (102) is provided with a connection port liquid-tightly and removably connectable to a brake fluid storage container (210) of a brake drive unit (200) of the motor vehicle; and
an outer shell (101) in which the power supply (120), the vacuum pump (130), and the adjustable pressure-regulating valve (140) are installed.

2. The device of claim 1, wherein the adjustable pressure-regulating valve (140) is configured to set or regulate a negative pressure output by the hose (102) during operation of the vacuum pump (130).

3. The device of claim 2, wherein the negative pressure is preset to a value between 0.1 and 1 bar.

4. The device of claim 1, further comprising a pressure measuring device (150) configured to be connected in series into the hose (102) upstream of the connection port of the hose (102) to detect the pressure in the hose (102).

5. The device of claim 1, wherein the power supply (120) is a battery or a voltage stabilizer which is connectable to an external voltage source.

6. The device of claim 1, wherein the controller (110) is a manual switch for controlling the power supply (120) to provide electric power.

7. The device of claim 4, wherein the controller (110) further comprises an electronic control unit, wherein the electronic control unit receives data of the pressure measuring device (150) and based on the received data, instructs the power supply (120) to provide electric power.

8. The device of claim 7, further comprising a display (160) on which the date received by the electronic control unit from the pressure measuring device (150) are displayed.

## Patentansprüche

1. Vorrichtung zur Vermeidung von Bremsschleifen bei einer Emissionskonformitätsprüfung eines Kraftfahrzeugs, umfassend:
eine Vakuumpumpe (130); und
eine Energieversorgung (120), die dazu in der Lage ist, der Vakuumpumpe (130) elektrische Energie bereitzustellen;
eine Steuerung (110), die Energieversorgung (120) steuert, der Vakuumpumpe (130) wahlweise elektrische Energie bereitzustellen, **dadurch gekennzeichnet, dass** die Vorrichtung ferner umfasst:
einen Schlauch (102), der sich von einem Auslass der Vakuumpumpe (130) erstreckt, wobei ein verstellbares, druckregulierendes Ventil (140) mit dem Schlauch (102) in Serie verbunden ist, und ein Ende des Schlauchs (102) mit einem Verbindungsanschluss versehen ist, der flüssigkeitsdicht und abnehmbar mit einem Bremsflüssigkeit-Speicherbehälter (210) einer Bremsantriebseinheit (200) des Kraftfahrzeugs verbindbar ist; und
eine Außenhülle (101), in der die Energieversorgung (120), die Vakuumpumpe (130), und das verstellbare, druckregulierende Ventil (140) installiert sind.

2. Vorrichtung nach Anspruch 1, wobei das verstellbare, druckregulierende Ventil (140) dazu eingerichtet ist, eine Unterdruck Ausgabe durch den Schlauch (102) während des Betriebs der Vakuumpumpe (130) einzustellen oder zu regulieren.

3. Vorrichtung nach Anspruch 2, wobei der Unterdruck auf einen Wert zwischen 0,1 und 1 bar voreingestellt ist.

4. Vorrichtung nach Anspruch 1, ferner umfassend eine Druckmessvorrichtung (150), die dazu eingerichtet ist, in dem Schlauch (102) stromaufwärts des Verbindungsanschlusses des Schlauchs (102) in Serie verbunden zu sein, um den Druck in dem Schlauch (102) zu erfassen.

5. Vorrichtung nach Anspruch 1, wobei die Energieversorgung (120) eine Batterie oder ein Spannungsstabilisator ist, der mit einem externen Spannungsquelle verbindbar ist.

6. Vorrichtung nach Anspruch 1, wobei die Steuerung (110) ein manueller Schalter ist, der zur Steuerung der Energieversorgung, um elektrische Energie bereitzustellen, ist.

7. Vorrichtung nach Anspruch 4, wobei die Steuerung (110) ferner eine elektronische Steuereinheit umfasst, wobei die elektronische Steuereinheit Daten der Druckmessvorrichtung (150) empfängt und basierend auf den empfangenen Daten, die Energieversorgung (120) instruiert, elektrische Energie bereitzustellen.

8. Vorrichtung nach Anspruch 7, ferner umfassend eine Anzeige (160), auf der die durch die elektronische Steuereinheit empfangenen Daten von der Druckmessvorrichtung (150) angezeigt sind.

## Revendications

1. Dispositif destiné à éviter un frottement de frein dans un essai de conformité d'émission d'un véhicule à moteur, comprenant :
une pompe à vide (130) ; et
une alimentation électrique (120) capable de fournir une puissance électrique à la pompe à vide (130) ;
un moyen de commande (110) commandant l'alimentation électrique (120) pour fournir de manière sélective la puissance électrique à la pompe à vide (130),
**caractérisé en ce que** le dispositif comprend en outre :
un flexible (102) s'étendant à partir d'une sortie de la pompe à vide (130), dans lequel une valve de réduction de pression ajustable (140) est raccordée en série au flexible (102), et une extrémité du flexible (102) est munie d'un port de raccordement qui peut être raccordé de manière amovible et étanche aux liquides à un contenant de stockage de liquide de frein (210) d'une unité d'entrainement de frein (200) du véhicule à moteur ; et
une coque externe (101) dans laquelle l'alimentation électrique (120), la pompe à vide (130) et la valve de réduction de pression ajustable (140) sont installées.

2. Dispositif selon la revendication 1, dans lequel la valve de réduction de pression ajustable (140) est configurée pour régler ou réguler une sortie de pression négative par le flexible (102) pendant le fonctionnement de la pompe à vide (130).

3. Dispositif selon la revendication 2, dans lequel la pression négative est préréglée sur une valeur comprise entre 0,1 et 1 bar.

4. Dispositif selon la revendication 1, comprenant en outre un moyen de mesure de pression (150) configuré pour être relié en série dans le flexible (102) en amont du port de raccordement du flexible (102) afin de détecter la pression dans le flexible (102).

5. Dispositif selon la revendication 1, dans lequel l'alimentation électrique (120) est une batterie ou un stabilisateur de tension qui peut être relié à une source de tension externe.

6. Dispositif selon la revendication 1, dans lequel le moyen de commande (110) est un commutateur manuel pour commander à l'alimentation électrique (120) de fournir la puissance électrique.

7. Dispositif selon la revendication 4, dans lequel le moyen de commande (110) comprend en outre une unité de commande électronique, dans lequel l'unité de commande électronique reçoit des données du moyen de mesure de pression (150) et, sur la base des données reçues, ordonne à l'alimentation électrique (120) de fournir la puissance électrique.

8. Dispositif selon la revendication 7, comprenant en outre un affichage (160) sur lequel les données reçues par l'unité de commande électronique en provenance du moyen de mesure de pression (150) sont affichées.
